# EUROPEAN PATENT APPLICATION

(11) **EP 0 864 989 A2**
(43) Date of publication of application: **16.09.1998**
(21) Application number: 98104182.5
(22) Date of filing: 09.03.1998
(51) Int. Cl.: G06F 17/30

(54) **Method and apparatus for searching for files and for utilizing the found files**

(30) Priority: 11.03.1997 JP 56059/97
(71) Applicant: NEC CORPORATION, Tokyo (JP)
(72) Inventor: Nomura, Naoyuki, Minato-ku, Tokyo (JP); Muraki, Kazunori, Minato-ku, Tokyo (JP); Ikeda, Takahiro, Minato-ku, Tokyo (JP)
(74) Representative: Betten & Resch

(57) **Abstract**

The present invention presents a tool which enables users to concentrate on their work such as writing, without having their mind-set distracted by information searches. The present invention offers a method and apparatus for searching for files and for utilizing the found files comprising an information input and display window for displaying accessible files and displaying the results of user's operations performed at information terminals having functions to search and display files based on the user's operations of the terminals, a file database for accumulating the accessible files either within or outside of the information terminals, and a key object extracting means for extracting key objects from a portion of or from the entire information displayed in the above information input and display window in order to search for other related files, wherein the above key object extracting means searches for and retrieves, from the above file database, files containing a key object group extracted from the above information input and display window and a key object group possessing similarity greater than a predetermined degree, and displays a list of those retrieved files in a file list display and select window.

## Description

### BACKGROUND OF THE INVENTION

### Technical Field of the Invention

The present invention relates to file search and file preparation apparatuses for individual use or use over a network, which are widely used in fields such as business, research, and education. More particularly, it relates to a method and apparatus for searching for files and for utilizing the found files, which automatically searches for files which have relevance to certain sections within a file which is being read, and which presents these files to a user in a manner that may be handled easily.

### Description of the Related Art

In recent years, due to the amount of digitized files which has increased rapidly and the wide popularization of networks, the number of files which users may access from an information terminal has accordingly increased. Conventionally, under such circumstances, optical disk electronic filing systems with corresponding file browsers have been developed for use on terminals. And various independent technologies have also been developed to provide search utilities for resources over networks. However, conventional search tools and interfaces necessitates "search key extraction", "selection of search field", "input using search protocol based on search logic", among others, as well as interactive connections with search systems or file systems in order to connect to remote databases or dispersed databases, depending on the location of the desired files. Unfortunately, there is a problem of the loss of the efficiency and quality in this industry, by unnecessarily requiring the user to be cognizant of complex operations of the searching process.

On the other hand, with respect to the creation of compound objects such as a file, technologies such as the automatic linking of a plurality of objects within a file or the operation and updating of related character arrays and tables, already exists. And, the technology to designate, to operate, and to extract language-based units from text data with a single mouse click of an object within a file, or the technology to designate an object as operable (or active) exist as well. Due to the advancement of large capacity recording apparatuses and the advancement and wide popularization of networking, we are simply overflowing with large amounts of files. Consequently, the need to apply these technologies, which are fitted for working with a plurality of objects within a file, to creating links between files, to searching for files, and to operating files have become apparent. Then, there is a need for integrating the above technologies and for providing a new user interface.

In this case, a standard for information sharing or information distribution (e.g. CALS: refer to MIL-M-28001A (file standards), MIL-STD-1840A (exchanging standards)) and a technology to ensure compatibility are necessary. With the above-mentioned technologies, however, there are no means of solving the problem at hand from the angle of information exchanging.

However, from the point of view of user interfaces, which holds some expectations for lessening the burden from the information search operations, there is the invention of the Japanese Patent Application, First Publication, No. Hei 5-307570 "File Management Apparatus". This particular claimed invention has the characteristic of comprising a dispersed file management database which allows for automatic keywords and a user interface in a special menu format. It, unfortunately, obligates the user to understand and to learn the special menu and the usage thereof, and to perform the search-specific operations every time.

The Japanese Patent Application, First Publication, No. Hei 5-81328 "Automatic Key Word Input System" is claimed to reduce the burden of manually creating indices which conventionally consumed enormous amounts of time. Although it does have a certain amount of labor-saving effects, when performing the search operation, the user is required to clearly indicate the desired key word with a mouse or such each time. Other than when creating indices, the "automatic key word input" is not realized, a function which the title of the claimed invention misleadingly implies.

The claimed invention relating to the automatic key word extraction represented by the Japanese Patent Application, First Publication, No. Hei 7-230468 "Automatic Key Word Extraction and Method Therefor" proposes an improved method of extracting the most appropriate key word from an inputted text. This invention adds an improvement on the method for managing the character type when cutting out an character array area which does not apply to the analysis of morphological elements. The discrimination, the processing, and the management methods of texts, including the means of handling particles and character types, are described in detail, in the conventional technologies of automatic key word extraction and automatic searches including this invention.

As a method of automatically generating a search format for retrieving files stored in a file database, there is the Japanese Patent Application, First Publication, No. Hei 5-189492 "Apparatus for Automatic Generation of Search Format". However, this apparatus assumes the existence of an input mechanism which accepts natural language text which corresponds to natural language or restricted sentence construction and vocabulary. Accordingly, a user is required to create command text which correspond to search formats in natural language or pseudo-natural language, and to spend a significant amount of time for the input process.

No matter how the conventional automatic key word extracting means are combined, it will not directly contribute to the major reduction of the number of operations.

As a result, there is a disadvantage of the inability to focus on the crucial element, which is the content of the file, when the conventional technologies are employed.

### SUMMARY OF THE INVENTION

The present invention, hence, takes the above-mentioned circumstances into consideration, and proposes to offer an apparatus for searching for files and for utilizing the found files comprising:
an information input and display window for displaying accessible files and displaying the results of user's operations performed at information terminals having functions to search and display files based on the user's operations of the terminals;
a file database for accumulating the accessible files; and
a key object extracting means for extracting key objects from a portion of or from the entire information displayed in the above information input and display window in order to search for other related files,
   wherein the above key object extracting means searches for and retrieves, from the above file database, files containing a key object group extracted from the above information input and display window and a key object group possessing similarity greater than a predetermined degree, and displays a list of those retrieved files in a file list display and select window.

Additionally, in order to resolve the above mentioned problems, the present invention proposes to offer a method for searching for files and for utilizing the found files comprising:
a step for outputting an information input and display window for displaying accessible files and displaying the results of user's operations performed at information terminals having functions to search and display files based on the user's operations of the terminals;
a step for extracting key objects from a portion of or from the entire information displayed in the above information input and display window in order to search for other related files;
a step for searching for and retrieving, from a file database for accumulating the accessible files, files containing a key object group extracted from the above information input and display window and a key object group possessing similarity greater than a predetermined degree; and
a step for displaying a list of those retrieved files in a file list display and select window.

According to the present invention, the user will not be compelled to be cognizant of the information search process and will be able to concentrate on writing which is actually the user's main job. As a result, the efficiency and the quality of the white collar industry will no doubt improve.

### BRIEF DESCRIPTION OF THE DRAWINGS

Fig. 1 is a block diagram which illustrates the structure of a method and apparatus for searching for files and for utilizing the found files according a preferred embodiment of the present invention.

Fig. 2 is a flow chart which illustrates the procedures for the extraction of a key object.

Fig. 3 is a conceptual diagram which illustrates the flow of the operation relating to the determination of the degree of similarity.

Fig. 4 is an example which illustrates the details of the degree of similarity among a text object group.

Fig. 5 is an example which illustrates the details of the degree of similarity among a table object group.

Fig. 6 is an example which illustrates the details of the degree of similarity among a bitmap object group.

Fig. 7 is a diagram which illustrates an example of a file search and list display.

Fig. 8 is a diagram which illustrates an example of the details of the corresponding files of a list display.

Fig. 9 is a diagram which illustrates an example of the details of the history of past search formats.

### DETAILED DESCRIPTION OF THE PREFERRED EMBODIMENTS OF THE INVENTION

A preferred embodiment of the present invention will be explained with reference to drawings below.

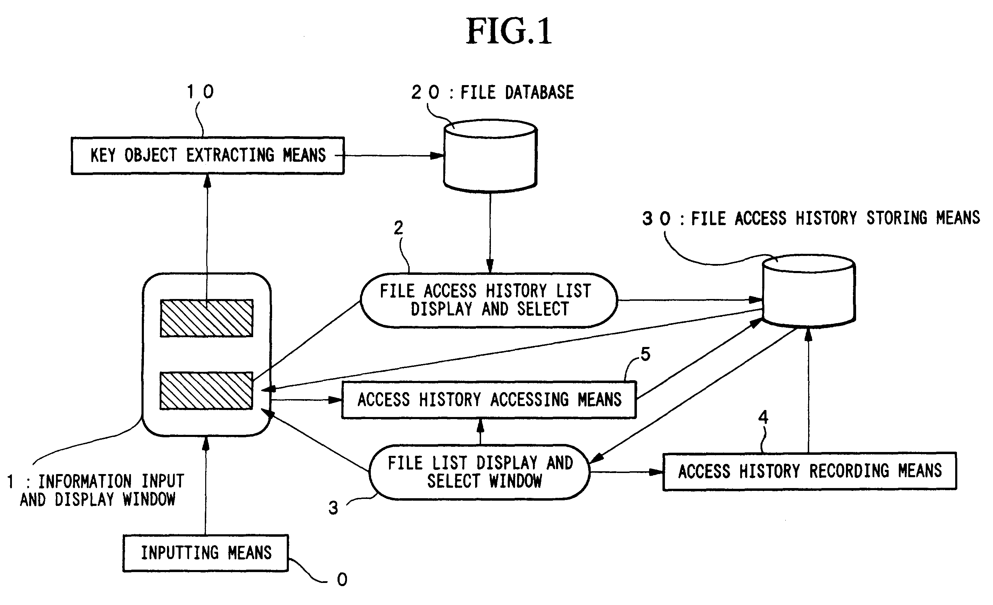

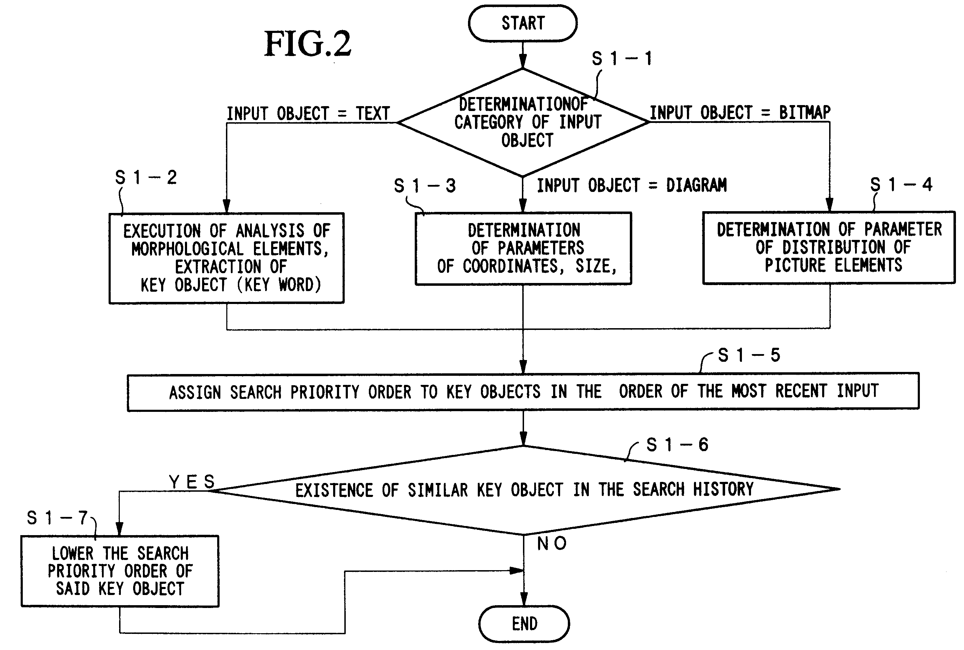

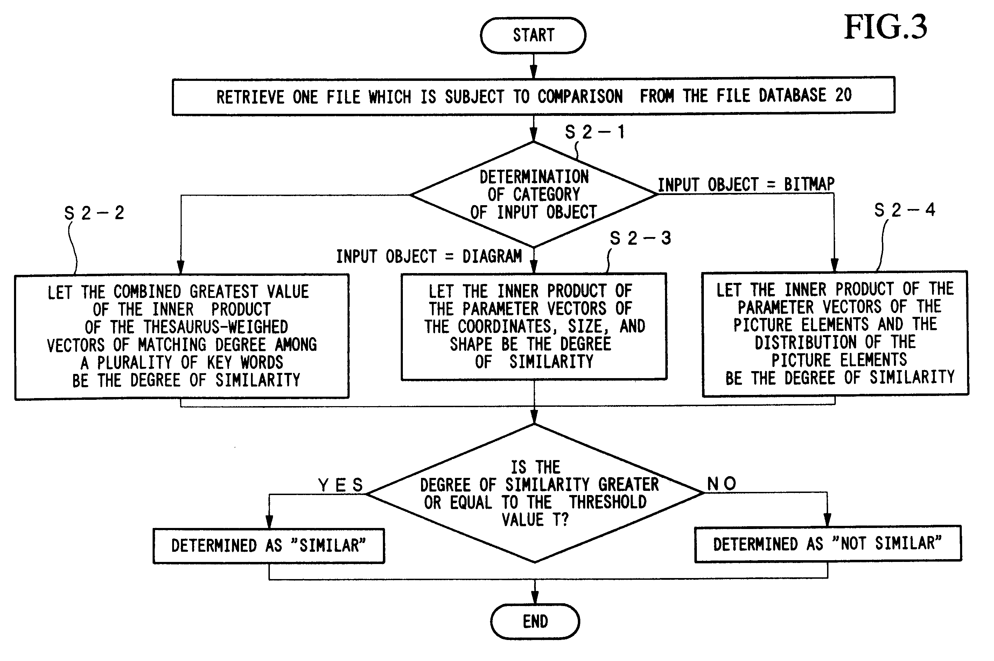

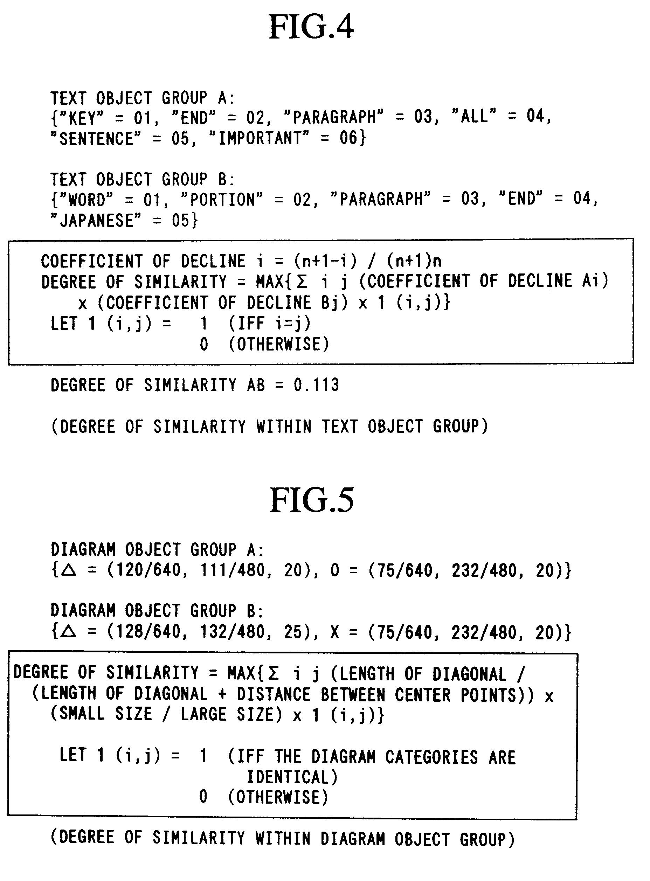

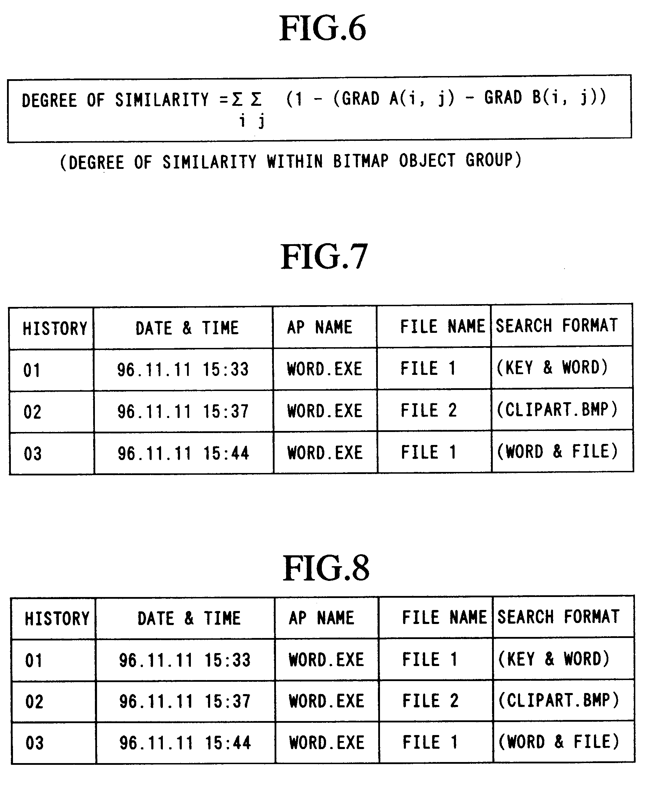

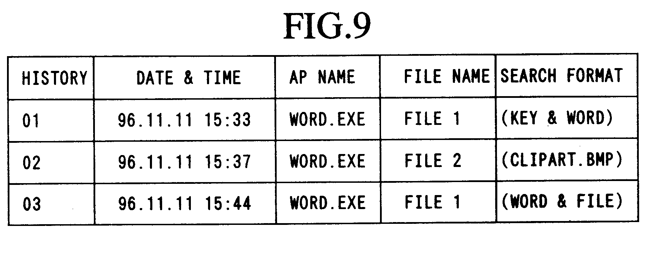

Fig. 1 is a block diagram which illustrates the structure of a preferred embodiment according to the method of searching for files and for utilizing the found files of the present invention. Fig. 2 is a conceptual diagram which illustrates the flow of the operation relating to the extraction of a key object. Fig. 3 is a conceptual diagram which illustrates the flow of the operations relating to the determination of the degree of similarity. Fig. 4 is an example which illustrates the details of the degree of similarity among a text object group. Fig. 5 is an example which illustrates the details of the degree of similarity among a diagram object group. Fig. 6 is an example which illustrates the details of the degree of similarity among a bitmap object group. Fig. 7 is a diagram of an example of a file search and list display. Fig. 8 is a diagram illustrating an example of the details of the corresponding files of a list display. Fig. 9 is a diagram illustrating a detailed example of the history of past search formats.

According to the apparatus of Fig. 1, when key objects such as text arrays are inputted into the information input and display window 1, the key object extracting means 10 analyzes its inputted key objects and extracts key objects according to the flow of the operation of Fig. 2. The key object extracting means 10 first determines the category of the inputted object at condition S1-1. It determines whether the key object inputted from the inputting means 0 is a text array, a diagram formed by a group of coordinate data with properties, or a bitmap.

In the case where the inputted object is a text array, process S1-2 is executed, where a morphological element analysis is performed and a key object (key word) is extracted. In the case where the inputted object is a diagram, process S1-3 is executed, where the determination of the parameters of the coordinates, the sizes, and the shapes are performed. In the case where the inputted object is a bitmap, process S1-4 is executed, where the determination of the parameter of the picture element distributions are performed.

After one of the processes among process S1-2, process S1-3, and process S1-4 is completed, then the key object extracting means executes process S1-5, which assigns the search priority order to the key objects in the order of the most recent input. That is, the most recent input is given the highest priority. For example, if the morphological element analysis is performed on a group of text and a word array is extracted at process S1-2, the last word (key object) in this word array is assigned the highest search priority, and from the word next to the last word, the search priority order is assigned in descending order.

At condition S1-6, it is determined whether a past search history exists for the similar key object. This determination employs the history of past search formats which is internalized in the key object extracting means 10. For example, if a history of past search formats exists as illustrated in Fig. 9 (the example indicating the history of past search formats), and if a word called "key" is extracted as a key object by process S1-2, then the word "key" is included in the search format of history ID = 01. Then, condition S1-6 will result in a "Yes". Or for example, at process S1-4, the extracted bitmap is a clipart.bmp. And this clipart.bmp is included in the search format of the history ID = 02. Then again, condition S1-6 will result in a "Yes". In the case where the existence of a past search history is being determined for bitmaps and diagrams, the key object extracting means 10 determines the match based on the name of the key object included in the search format in the history as illustrated in Fig. 9 when in the mode where the computing load is lessened and the operation speed is accelerated. When in other operation modes, the object of the file position recorded in the search format is retrieved, and the similarity between the retrieved object and the presently extracted key object is compared using one of the similarity determining functions, which exist for each object category. And, if the two objects are identical, then condition S1-6 will result in a "Yes".

When condition S1-6 is determined to be "Yes", process S1-7 is executed, where the position of the present key object in the search priority order is lowered. As mentioned above, at process S1-2, when the word "key" is extracted as a key object and if the word "key" is included in the search format of history ID = 01, then the present embodiment will have the word "key" placed at the lowest position in the search priority order among those of other key objects extracted at the same time. For example, let the original text array be "Important sentences all are not necessarily at the paragraph's end is the key". If the history of Fig. 9 did not exist, then the search priority order is assigned as follows: "key" = 01, "end" = 02, "paragraph" = 03, "all" = 04, "sentence" = 05, "important" = 06. In contrast, if the history of Fig. 9 did exist, then the search priority order is assigned as follows: "end" = 01, "paragraph" = 02, "all" = 03, "sentence" = 04, "important" = 05, "key" = 06.

After the key object extracting means 10 performs the key object extraction according to the procedure illustrated in Fig. 2, the plurality of key objects which are assigned search priority numbers are sent to the file database 20 via the signal line illustrated in Fig. 1 along with either a key word character array if the key objects are a text array, the parameters of the coordinates, the sizes, and the shapes if the key objects are diagram objects, and a parameter representing the picture element distribution if the key objects are bitmaps.

When the key object extracting means 10 retrieves a file from the file database 20, the determination of the degree of similarity of the key objects sent to the file database 20 is performed according to the procedure illustrated in Fig. 3. With respect to a single file retrieved from the file database 20, the key object extracting means 10 first performs the determination of the category of the inputted object at process S2-1. The inputted object is determined whether it is a text array, a diagram formed by coordinate data possessing properties, or a bitmap.

If the inputted object is a text array, then process S2-2 is executed. The combined greatest value of the inner product of the thesaurus-weighed matching degree vectors among the plurality of key words of a comparable single file retrieved from the file database 20 and the plurality of key words of the text array of the inputted object is set to be the degree of similarity. If the inputted object is a diagram, then process S2-3 is executed. The inner product between the coordinate, size and shape parameter vectors of the diagram of the comparable single file and the coordinate, size and shape parameter vectors of the diagram of the inputted object is set to the degree of similarity. If the inputted object is a bitmap, then process S2-4 is executed. The inner product between the picture element and the picture element distribution parameter vectors of the bitmap of the comparable single file and the picture element and the picture element distribution parameter vectors of the bitmap of the inputted object is set to be the degree of similarity.

The above mentioned process S2-2 will be explained in detail based on actual data samples illustrated in Fig. 4. The plurality of key words of the text array of the inputted object is the text object group A: {"key" = 01, "end" = 02, "paragraph" = 03, "all" = 04, "sentence" = 05, "important" = 06}. The plurality of key words of a comparable single file is the text object group B: {"word" = 01, "portion" = 02, "paragraph" = 03, "end" = 04, "Japanese" = 05}. Here, when the degree of similarity is calculated based on the equations indicated in Fig. 4,

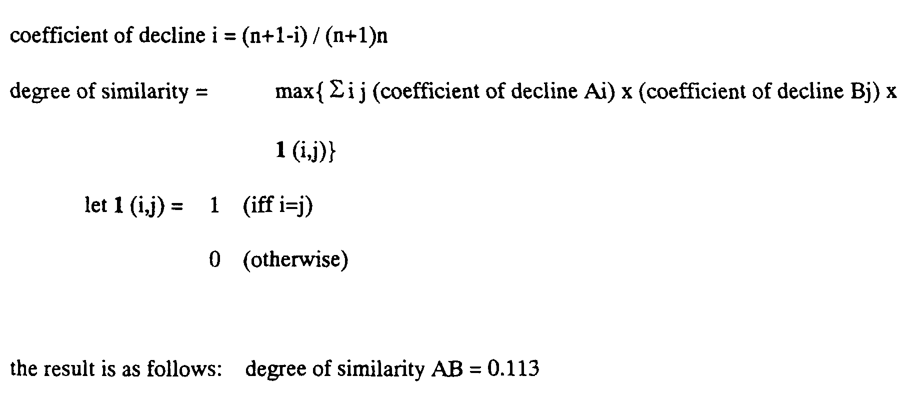

When the inputted object is a diagram object, the diagram object group A is {_ = (120/640, 111/480, 20), O = (75/640, 232/480, 20)} and the diagram object group B is {_ = (128/640, 132/480, 25), X = (75/640, 232/480, 20)}. When the degree of similarity of calculated based on the equations indicated in Fig. 5,

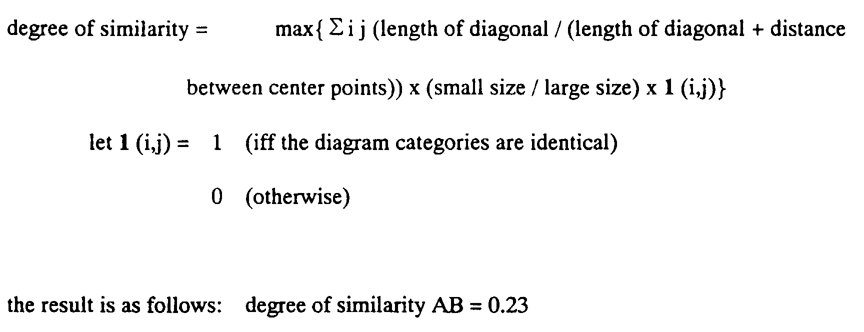

After either process S2-2, process S2-3, or process S2-4 is completed, then the key object extracting means 10 executes condition S2-5, where the degree of similarity is determined whether it is greater or equal to the threshold value T. At this condition, if the degree of similarity is found to be greater or equal to the threshold value T, then the determination results in a "Similar", and if the degree of similarity is found to be less than the threshold value T, then the determination results in a "Not similar". This concludes the process of determination of the degree of similarity.

The degree of similarity determining process illustrated in Fig. 3 is executed on the inputted object and each of the files stored in the file database 20, and then the file name of the file whose degree of similarity was greater or equal to the threshold value T is displayed in the file list display and select window 2 in the format of the list display of the file search results illustrated in Fig. 7. In Fig. 7, history ID indicates the order of display. Here, those files whole degree of similarity was greater or equal to the threshold value T after a number of the degree of similarity determinations were performed are displayed in the order the results are displayed along with the date and time of their display. The name of the application program managing the window where the key object extracting means 10 extracted the key object is displayed under AP name. The file name corresponding to the window where the key object extracting means 10 extracted the key object is displayed under File Name. The search format of the automatically generated key word search used in the determination of the degree of similarity (for the case where the inputted object is text) or the name of the object of the file in the file database 20 which was determined to be "Similar" is stored under Search Format. For example, with regard to File 2 of Fig. 7, the object named clipart.bmp of File 2 indicates that it was determined to be "Similar" to the inputted object.

After a file is determined to be "Similar" and is displayed in the file list display and select window 2 as shown in Fig. 7, the details of this display is sent to the file access history storing means 30 via the signal line illustrated in Fig. 1. The information stored in the file access history storing means 30 is the combination of the information corresponding to each of the history ID's indicated in Fig. 7 and of the information of the inputted object. The "information of the inputted object" refers to the duplicate of the inputted object or the information allowing access to the inputted object (address, date and time of last used, size, etc.).

When a user requests the retrieval of the access history to the information input and display window 1 via the inputting means 0, or when the need arises during the display of the file access history list display and select window 3, the access history accessing means 5 accesses the file access history storing means 30, and the history satisfying the designated conditions or the display conditions of the file access history list display and select window 3 is retrieved from the history of file determined to be "Similar" in the past as illustrated in Fig. 8, and is displayed in the file access history list display and select window 3. The file access performed here is detected by the access history recording means 4 and the access identifying information (user's name performing the access, location, date and time, etc.) is recorded in the history ID records of the file access history storing means 30.

According to the above described procedure, by displaying the related file possessing similarity with an object inputted through the inputting means 0 in the file list display and select window 2, it is possible to realize the improvement in the quality and efficiency of an operation by presenting expressive supporting elements relating to the file of the current operation in the information input and display window 1 or by drastically reducing the time spent in searches and the complex paperwork involved in searches.

According to the present invention, it is possible for users to have related file groups displayed in front of their eyes even when they only intended to use the terminal operation for searches, through the automatic extraction of key object groups from active files presently displayed on the screen while users are using the information terminals for the specific purpose of creating or perusing files. More particularly, with the invention equipped with a file access history list display and select window, a user may refer to the file access histories of other users who share the file database or even freely take advantage of the accessed information. Moreover, by simultaneously displaying multistaged search results such as a list of automatically searched related files, a list of users who accessed those files, a list of files which were created or revised after the moment when the users accessed the files, along with the details of those files, the present invention offers the convenience for users to take advantage of any portion of the automatic search results simultaneously displayed at any arbitrary time.

## Claims

1. An apparatus for searching for files and for utilizing the found files characterized in comprising:
an information input and display window for displaying accessible files and displaying the results of user's operations performed at information terminals, having functions to search and display files based on said user's operations of the terminals;
a file database for accumulating accessible files; and
a key object extracting means for extracting key objects from at least a portion of the information displayed in said information input and display window in order to search for related files,
wherein said key object extracting means searches for and retrieves, from said file database, files containing said key object group extracted from said information input and display window and a key object group possessing similarity greater or equal to a predetermined degree, and displays a list of said retrieved files in a file list display and select window.

2. A method for searching for files and for utilizing the found files characterized in comprising:
a step for outputting an information input and display window for displaying accessible files and displaying the results of user's operations performed at information terminals having functions to search and display files based on the user's operations of the terminals;
a step for extracting key objects from at least a portion of the information displayed in said information input and display window in order to search for other related files;
a step for searching for and retrieving, from a file database for accumulating the accessible files, files containing a key object group extracted from said information input and display window and a key object group possessing similarity greater than a predetermined degree; and
a step for displaying a list of said retrieved files in a file list display and select window.

3. An apparatus for searching for files and for utilizing the found files in accordance with claim 1, characterized in further comprising a file access history storing means for storing past file access histories of files which users may designate within said file list display and select window,
wherein a list of file access histories is searched from said file access history storing means and is displayed in a file access history list display and select window.

4. A method for searching for files and for utilizing the found files in accordance with claim 2, characterized in further comprising:
a step for searching for a list of file access histories from a file access history storing means for storing past file access histories of files which users may designate within said file list display and select window; and
a step for displaying said list of file access histories in a file access history list display and select window.

5. An apparatus for searching for files and for utilizing the found files in accordance with claim 3, characterized in further comprising a displaying means for displaying a list of said file access histories in said file access history list display and select window after being sorted according to such file access categories as "Created", "Revised", "Cited", "Referred" or according to "Accessing User", "Date and Time", "Location", and such, when a past file access history of a file designated by a user through said file list display and select window is searched for and retrieved from said file access history storing means.

6. A method for searching for files and for utilizing the found files in accordance with claim 4, characterized in further comprising a step for displaying a list of said file access histories in said file access history list display and select window after being sorted according to such file access categories as "Created", "Revised", "Cited", "Referred" or according to "Accessing User", "Date and Time", "Location", and such, when a past file access history of a file designated by a user through said file list display and select window is searched for and retrieved from said file access history storing means.

7. An apparatus for searching for files and for utilizing the found files in accordance with claim 3, characterized in further comprising a displaying means for displaying, in said file access history list display and select window, a file which is to be accessed for said file access history and other files which are simultaneously accessed from a single information terminal at the time of accessing and which are stored in said file access history storing means, when a past file access history of a file designated by a user through said file list display and select window is searched for and retrieved from said file access history storing means.

8. A method for searching for files and for utilizing the found files in accordance with claim 4, characterized in further comprising a step for displaying, in said file access history list display and select window, a file which is to be accessed for said file access history and other files which are simultaneously accessed from a single information terminal at the time of accessing and which are stored in said file access history storing means, when a past file access history of a file designated by a user through said file list display and select window is searched for and retrieved from said file access history storing means.

9. An apparatus for searching for files and for utilizing the found files in accordance with claim 3, characterized in further comprising an inserting means for inserting at a least a portion of a file selected by a user from a list of files displayed in said file list display and select window into said information input and display window.

10. A method for searching for files and for utilizing the found files in accordance with claim 4, characterized in further comprising a step for inserting at a least a portion of a file selected by a user from a list of files displayed in said file list display and select window into said information input and display window.

11. An apparatus for searching for files and for utilizing the found files in accordance with claim 3, characterized in further comprising an access history accessing means for retrieving an access history of a file based on a menu select, a mouse click or a key press a which show the properties of said file t the time when a past file access history of said file designated by a user through said file list display and select window is searched for and retrieved from said file access history storing means.

12. A method for searching for files and for utilizing the found files in accordance with claim 4, characterized in further comprising a step for retrieving an access history of a file based on a menu select, a mouse click or a key press which show the properties of said file at the time when a past file access history of said file designated by a user through said file list display and select window is searched for and retrieved from said file access history storing means.

13. An apparatus for searching for files and for utilizing the found files in accordance with claim 3, characterized in further comprising an access history accessing means for retrieving the access histories of other files which were accessed when current file was created based on a menu select which shows the properties of said file, a mouse click or a key press at the time when a past file access history of said file designated by a user through said file list display and select window is searched for and retrieved from said file access history storing means.

14. A method for searching for files and for utilizing the found files in accordance with claim 4, characterized in further comprising a step for retrieving the access histories of other files which were accessed when current file was created based on a menu select which shows the properties of said file, a mouse click or a key press at the time when a past file access history of said file designated by a user through said file list display and select window is searched for and retrieved from said file access history storing means.

15. An apparatus for searching for files and for utilizing the found files in accordance with claim 3, characterized in further comprising an access history recording means for recording the bibliographical information of the access such as the user ID of said operator, the date and time of the access, and the terminal used in the access, and records said selected file along with the information of said access event when a portion of a file displayed in said file access history list display and select window is selected by an operator through a menu select, a mouse click, or a key press, at the time when a past file access history of said file designated by a user through said file list display and select window is searched for and retrieved from said file access history storing means and is displayed in said file access history list display and select window.

16. A method for searching for files and for utilizing the found files in accordance with claim 4, characterized in further comprising a step for recording the bibliographical information of the access such as the user ID of said operator, the date and time of the access, and the terminal used in the access, and records said selected file along with the information of said access event when a portion of a file displayed in said file access history list display and select window is selected by an operator through a menu select, a mouse click, or a key press, at the time when a past file access history of said file designated by a user through said file list display and select window is searched for and retrieved from said file access history storing means and is displayed in said file access history list display and select window.

17. An apparatus for searching for files and for utilizing the found files in accordance with claim 1, characterized in further comprising a similarity degree determining means for determining the degree of similarity by using the parameters of a function which are weighed by the number of times files were recently searched, when said files including a key object group possessing a degree of similarity greater than or equal to the key object group extracted from said information input and display window are searched for.

18. A method for searching for files and for utilizing the found files in accordance with claim 2, characterized in further comprising a step for using the parameters of a function which are weighed by the number of times files were recently searched for the determination of the degree of similarity, when said files including a key object group possessing a degree of similarity greater than or equal to the key object group extracted from said information input and display window are searched for.

19. An apparatus for searching for files and for utilizing the found files in accordance with claim 1, characterized in further comprising a similarity degree determination means for determining the degree of similarity by using a user profile function formed by the parameters computing the related fields or the importance based on the file operation results according to the contents of the file which the user has written or by manual operation, when files including a key object group possessing a degree of similarity greater than or equal to the key object group extracted from said information input and display window are searched for.

20. A method for searching for files and for utilizing the found files in accordance with claim 2, characterized in further comprising a step for using a user profile function formed by the parameters computing the related fields or the importance based on the file operation results according to the contents of the file which the user has written or by manual operation for the determination of the degree of similarity, when files including a key object group possessing a degree of similarity greater than or equal to the key object group extracted from said information input and display window are searched for.

21. An apparatus for searching for files and for utilizing the found files in accordance with claim 1, characterized in further comprising a similarity degree determination means for determining the degree of similarity by using an operation intellectual base formed by the parameters reflecting an organization which the user belongs to or the operation which the user is coordinating, when files including a key object group possessing a degree of similarity greater than or equal to the key object group extracted from said information input and display window are searched for.

22. A method for searching for files and for utilizing the found files in accordance with claim 2, characterized in further comprising a step for using an operation intellectual base formed by the parameters reflecting an organization which the user belongs to or the operation which the user is coordinating for the determination of the degree of similarity, when files including a key object group possessing a degree of similarity greater than or equal to the key object group extracted from said information input and display window are searched for.

23. An apparatus for searching for files and for utilizing the found files in accordance with claim 1, characterized in further comprising a similarity degree determining means for determining the degree of similarity by using the environmental parameters such as type of terminal the user is presently using, the size and shape of the display screen, when files including a key object group possessing a degree of similarity greater than or equal to the key object group extracted from said information input and display window are searched for.

24. A method for searching for files and for utilizing the found files in accordance with claim 2, characterized in further comprising a step for using the environmental parameters such as type of terminal the user is presently using, the size and shape of the display screen for determining the degree of similarity, when files including a key object group possessing a degree of similarity greater than or equal to the key object group extracted from said information input and display window are searched for.
